# EUROPÄISCHE PATENTSCHRIFT

(11) **EP 0 997 444 B1**
(45) Veröffentlichungstag und Bekanntmachung des Hinweises auf die Patenterteilung: **17.07.2002**
(21) Anmeldenummer: 99115585.4
(22) Anmeldetag: 06.08.1999
(51) Int. Cl.: C03B 33/027

(54) **Positionierverfahren und Positioniervorrichtung für Bearbeitungsköpfe einer Mehrkopf-Bearbeitungsmaschine**
Method and apparatus for positioning the working heads of a multiple-head working machine
Procédé et appareil pour positioner les têtes de travail d'une machine à multiples têtes de travail

(30) Priorität: 27.08.1998 DE 19839076
(43) Veröffentlichungstag der Anmeldung: 03.05.2000
(73) Patentinhaber: HEGLA Fahrzeug- u. Maschinenbau GmbH & Co. KG, D-37688 Beverungen (DE)
(72) Erfinder: Glaser, Siegfried, 37688 Beverungen (DE)
(74) Vertreter: Patentanwälte Dr. Solf & Zapf

(56) Entgegenhaltungen:
- DE-A- 4 230 811
- US-A- 4 604 934

## Beschreibung

Die Erfindung betrifft ein Verfahren und eine Vorrichtung zum Positionieren von mehreren zumindest entlang zweier Raumachsen verschiebbaren Bearbeitungsköpfen einer numerisch gesteuerten Mehrkopf-Bearbeitungsmaschine, insbesondere von Schneidköpfen einer numerisch gesteuerten Glasplattenschneideanlage für ebene Glasplatten.

Eine gattungsgemäße Vorrichtung ist aus der DE-C2-42 30 811 bekannt. In der vorgenannten Druckschrift wird eine numerisch gesteuerte Glasschneidanlage für Formschnitte beschrieben, bei der eine ebene Glasscheibe auf einem Schneidtisch ruht, der von einer mehrere Schneidköpfe nebeneinander aufnehmenden, entlang des Schneidtisches verfahrbaren Brücke überspannt ist. Die Schneidköpfe werden während des Schneidvorganges gemeinsam als "Block" über die zu bearbeitende Glasscheibe bewegt, so daß pro Schneidzyklus eine der Schneidkopfanzahl entsprechende Menge an Glasteilen (den sogenannten "Nutzen") ausgeschnitten wird. Eine derartige Vorrichtung hat sich bewährt. Es können kostengünstig in kurzer Zeit große Stückzahlen gleichförmiger Glasteile produziert werden. Um die Flexibilität einer solchen Glasschneidanlage im Hinblick auf variable Größen der auszuschneidenden Teile zu gewährleisten, ist der horizontale Abstand der Schneidköpfe entlang der Brücke zueinander einstellbar. Hierfür sind in der obengenannten Anlage feste oder verstellbare Justiergestänge zur Verbindung der einzelnen Schneidköpfe untereinander vorgesehen. Bei einer Umrüstung der Schneidanlage auf einen anderen, z.B. großflächigeren Formschnitt erfordert dies unerwünschte, aufwendige manuelle Umrüstarbeiten, wobei ein längerer Stillstand der Anlage unvermeidlich ist. Im Rahmen einer Umrüstung der Anlage auf einen neuen z. 3. großflächigen Formschnitt sind zunächst die bisherigen Justiergestänge manuell zu lösen. Daraufhin sind die Schneidköpfe entlang der Brücke manuell neu zu positionieren und durch Anbringen neuer, auf den neuen Abstand der Schneidköpfe abgestimmte Verbindungsgestänge mechanisch zu verbinden. Hierbei sind verschiedene Verbindungsgestänge zu bevorraten, was einen erhöhten logistischen und finanziellen Aufwand bedeutet.

Durch den Einsatz von variablen Justiergestängen kann der Zeitaufwand für die manuellen Umrüstarbeiten in begrenztem Umfang optimiert, jedoch nicht vermieden werden.

Mit numerisch gesteuerten Mehrkopfglasschneidanlagen der obengenannten Art können Glasscheiben mit Dicken von 1 mm bis 19 mm bearbeitet werden. Dazu ist es notwendig, die Schneidkörper, welche in den Schneidköpfen angeordnet sind, in ihrer Ruhelage ca. 22 mm bis 25 mm oberhalb der Tischoberfläche zu positionieren, um ein sicheres Zuführen von Glasscheiben bis zu 19 mm Dicke zu gewährleisten. Zu Beginn der Bearbeitung müssen die Schneidköpfe mit den Schneidkörpern auf die Glasplatte aufgesetzt werden. Hierzu werden die in den Schneidköpfen gelagerten, Schneidkörper aufnehmende Schneidkörperhalter pneumatisch abgesenkt und nach dem Aufsetzen der Schneidkörper auf der Glasplatte mit einer für das Schneiden notwendigen Normalkraft vorzugsweise pneumatisch belastet. Insbesondere bei dünnen Glasscheiben ist die Wucht des Aufpralls des Schneidkörpers auf der Glasoberfläche so groß, daß im Aufsetzpunkt unerwünschte Ausmuschelungen in der Glasoberfläche auftreten. Derartige Ausmuschelungen beinträchtigen sowohl die Schnittqualität als auch die Oberflächenqualität der Glasteile. Zudem entstehen durch zu hartes Aufsetzen der Schneidkörper auf der Glasplatte unerwünschte Oberflächenspannungen im Bereich des Aufsetzpunktes, wodurch das sich dem Schneiden anschließende Brechen nachteilig beinflußt wird.

Versuche, die Schneidkörper sehr langsam mit vermindertem Druck auf der Glasplatte aufzusetzen, haben gezeigt, daß zwar die Beschädigung der Glasoberfläche wirksam vermieden wird, jedoch führen derartige Maßnahmen zu einer unerwünschten und nicht praktikablen Taktzeitverlängerung des Bearbeitungsvorganges.

Aus der US-A-4 604 934 ist ein Positioniersystem für eine Vielzahl von Schlitten bekannt, wobei die Schlitten an vorgewählten Positionen einer Förderbandbrücke positionierbar sind und aus einem Schlittenverbund beim Erreichen der Sollposition vereinzelt werden können.

Die Schneidköpfe der Schlitten dieses Systems sind nach dem Positionieren ortsfest festgelegt. Ein Konturenschnitt ist mit dieser Anlage nicht möglich.

Der Erfindung liegt somit die Aufgabe zugrunde, den Zeitaufwand für erforderliche Umrüstarbeiten an einer gattungsgemäßen Mehrkopf-Schneidanlage auf ein zeitliches Minimum zu begrenzen, wobei der Einsatz von mechanischen Verbindungsgestellen und manuelle Montagearbeiten an der Schneidanlage vermieden werden sollen. Zudem soll nach einer vorteilhalten Weiterbildung der Erfindung eine Beschädigung der Glasoberfläche beim Aufsetzen der Schneidkörper bei gleichbleibender Taktzeit verhindert werden.

Diese Aufgaben werden durch die Merkmale des Verfahrens nach Anspruch 1 sowie durch die Merkmale einer Vorrichtung zum Durchführen des Verfahrens nach Anspruch 11 gelöst. Vorteilhafte Weiterbildungen der Erfindung werden in den Unteransprüchen gekennzeichnet.

Das erfindungsgemäße Verfahren und eine erfindungsgemäße Anlage sieht eine vollautomatische Positionierung der Schneidköpfe entlang der den Schneidtisch zusammen mit den Schneidkörpern überspannenden Brücke. Eine Weiterbildung der Erfindung sieht eine Vorpositionierung der Schneidköpfe entlang einer zur Werkstückebene senkrechten Raumachse in Abhängigkeit der Werkstückdicke und der Werkstoffeigenschaften vor.

Erfindungsgemäß werden dabei zunächst die beliebig entlang der Brücke verteilten, je einem Trägerschlitten zugeordneten Schneidköpfe engstmöglich zueinander angeordnet und zu einem Verbund zusammengefaßt (Bündelung). Wesentlich ist dabei, daß die verbundbildenden Mittel derart ausgebildet sind, daß nacheinander jeder Schlitten einzeln aus dem Verbund gelöst werden kann.

Nach der Bündelung der Schlitten zusammen mit ihren Schneidköpfen werden die Schlitten, von denen nur einer entlang der Brückenlängsachse verschiebbar angetrieben ist, nacheinander beginnend mit dem vom angetriebenen bzw. Antriebsschlitten am weitesten entfernt gelegenen Schlitten in ihre jeweilige Sollpositicn an der Brücke verfahren. Nach Erreichen der Sollposition eines Schlittens wird der betreffende Schlitten bezüglich der Brückenlängsachse arretiert, aus dem Verbund gelöst und an die bereits positionierten Schlitten gekoppelt, so daß ein neuer Verbund aus positionierten Schlitten entsteht. In dieser Weise wird weiterverfahren bis alle nichtangetriebenen Schlitten positioniert, bezüglich der Brücke arretiert und an den neuen Verbund gekoppelt sind. Danach wird der angetriebene Schlitten in seine neue Sollposition verfahren und mit dem neuen Verbund gekoppelt.

Ist die Bildung des neuen Verbundes aus den positionierten Schlitten abgeschlossen, so werden die Fixierungen der nichtangetriebenen Schlitten bezüglich der Brücke gelöst, so daß der neue Verbund entlang der Brückenlängsachse verfahren werden kann.

Ein derartiges Verfahren ist geeignet mit im Anlagenbau üblichen, kostengünstigen Mitteln, z.B. mit handelsüblichen Pneumatik- oder Hydraulikelementen, Servomotoren in Verbindung mit einer insbesondere numerischen Steuerung in vollautomatischem Betrieb eine Schneidkopfpositionierung von mehreren Schneidköpfen entlang einer werksstückparallelen Raumachse zu realisieren. Hierbei werden die manuellen Umrüstarbeiten sowie die dafür notwendigen Justiergestelle vermieden, wodurch ein erheblicher Kostenvorteil sowie eine erhöhte Flexibilität bei Änderungen der Schneidkontur erreicht wird. Ein weiterer erheblicher Vorteil besteht darin, daß mit nur dem einen Antrieb des angetriebenen Schlittens sowohl die Positionierung der Schneidköpfe als auch das anschließende Abfahren der Schneidkonturen entlang der Brückenlängsachse möglich ist.

Zur korrekten höhenmäßigen Vorpositionierung der Schneidköpfe bezüglich der Werkstückoberfläche entlang einer dazu senkrechten bzw. vertikalen Achse wird zunächst eine von der Werkstückdicke und den Werkstoffeigenschaften abhängige Stellgröße ermittelt und als Programmparameter in der Anlagensteuerung abgelegt. In Abhängigkeit dieser Stellgröße werden die Schneidköpfe derart positioniert, daß die Schneidkörper bei eingelegter Glasplatte einen nur geringen Abstand zur Werkstückoberfläche aufweisen. Dadurch wird die Wucht des Aufpralls der Schneidkörper auf der Glasoberfläche beim Absenken wirksam reduziert und Qualitätseinbußen, z. B. Ausmuschelungen an der Oberfläche der ausgeschnittenen Glasteile vermieden. Ein derartiger, gegenüber herkömmlichen Anlagen zusätzlicher Positionierungsvorgang kann z. B. während der Vorpositionierung der Schneidköpfe entlang der Brücke erfolgen.

Somit ermöglicht es ein derartiges Verfahren ohne Taktzeiteinbußen Glasplatten verschiedener Dicke bei gleichbleibend hoher Oberflächenqualität zu bearbeiten. Zudem kann durch den Einsatz eines Antriebes, insbesondere motorischen Antriebes der Vorpositioniereinrichtungen ein vollautomatisches vertikales Vorpositionieren erfolgen.

Anhand der Zeichnungen wird die Erfindung im folgenden beispielhaft näher erläutert.

Es zeigen:
- Fig. 1: schematisch eine Draufsicht auf eine erfindungsgemäße Mehrkopfschneidanlage
- Fig. 2: schematisch eine perspektivische Ansicht einer erfindungsgemäßen Positioniervorrichtung für fünf Schneidköpfe
- Fig. 3a: eine perspektivische Teilansicht einer betätigten Fixiereinrichtung
- Fig. 3b: eine perspektivische Teilansicht einer gelösten Fixiereinrichtung
- Fig. 4a: eine perspektivische Teilansicht einer betätigten Klemmeinrichtung
- Fig. 4b: eine perspektivische Teilansicht einer gelösten Klemmeinrichtung
- Fig.5a-5f: den schrittweisen Ablauf eines Positioniervorganges der Bearbeitungsköpfe für eine Schneidanlage mit fünf Schneidköpfen
- Fig. 6: schematisch einen vertikal vorpositionierten Schneidkopf.

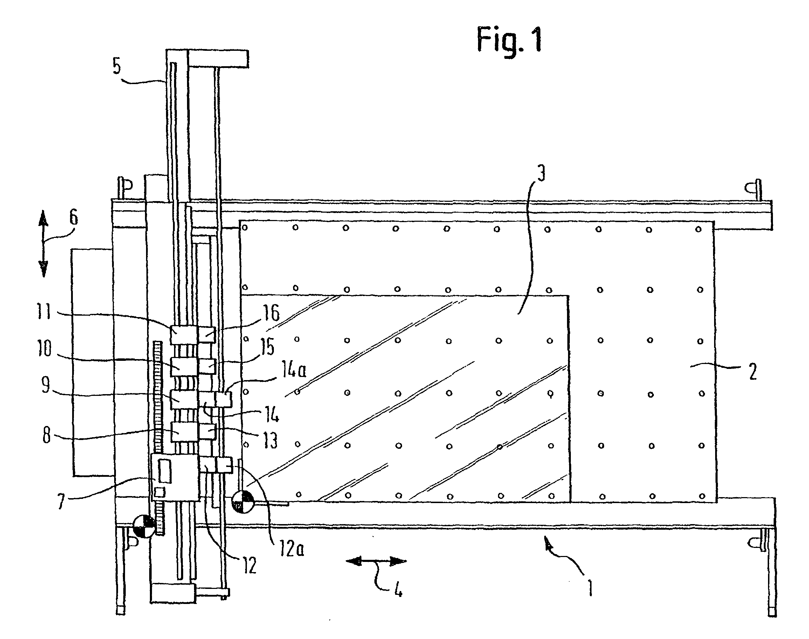

Eine erfindungsgemäße Schneidanlage 1 (Fig. 1) weist einen Schneidtisch 2 zum Ausschneiden von ebenen Glasteilen aus einer Glasplatte 3 auf. Die Schneidanlage 1 besitzt eine in Tischlängsrichtung 4 verfahrbare, den Schneidtisch 2 überspannende Brücke 5. An der Brücke 5 sind nebeneinander in Tischquerrichtung 6 verfahrbar, z. B. fünf jeweils paarweise miteinander verbindbare Trägerschlitten 7, 8, 9, 10, 11 angeordnet, wobei der Trägerschlitten 7 über einen Antrieb entlang der Tischouerrichtung 6 verfügt. Brückenvorderseitig sitzen an den Trägerschlitten 7, 8, 9, 10, 11 jeweils an Schneidkopfkonsolen 12e, 13e, 14e, 15e, 16e befestigte, baugleiche Bearbeitungsköpfe, die als Schneidköpfe 12, 13, 14, 15, 16 ausgebildet sind.

Zusätzlich können an einzelnen Bearbeitungsköpfen, z. B. den Schneidköpfen 12, 14 Hilfsschneidköpfe 12a, 14a angebracht werden, die vorzugsweise für geradlinige Grobzuschnitte der Glasplatte 3 oder für Hilfsschnitte zum leichteren und prozeßsichereren Ausbrechen der Nutzen eingesetzt werden.

Die Schneidköpfe 12, 13, 14, 15, 16 bestehen im wesentlichen aus je einem Schneidkopfgehäuse 12b, 13b, 14b, 15b, 16b und einem Schneidkörperträger 12c, 13c, 14c, 15c, 16c, wobei die Schneidkörperträger 12c, 13c, 14c, 15c, 16c gegenüber den Schneidkopfgehäusen 12b, 13b, 14b, 15b, 16b entlang einer zur Werkstückoberfläche senkrechten Zustellachse 41a axial verschiebbar und um diese Achse drehbar gelagert und antreibbar sind. Die Schneidkörperhalter 12c, 13c, 14c, 15c, 16c dienen weiterhin zur Aufnahme von Schneidkörpern 12d, 13d, 14d, 15d, 16d, die beispielsweise als Schneidrädchen ausgebildet sind.

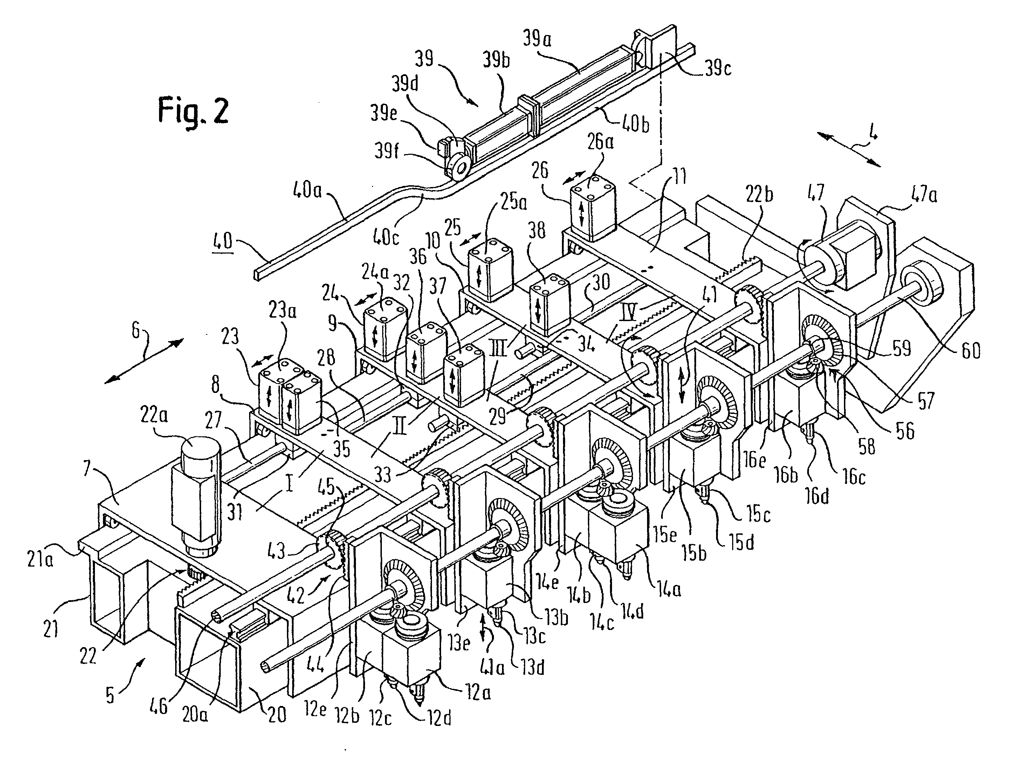

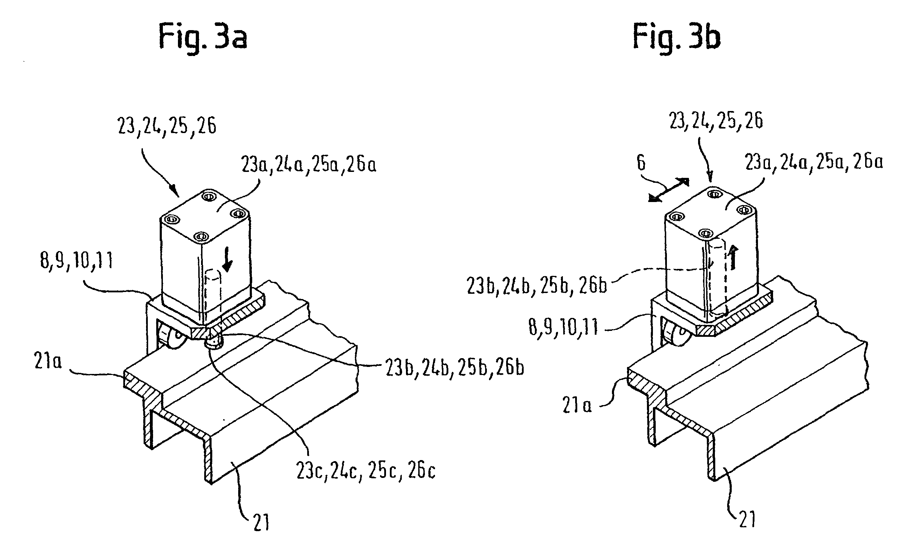

Die Brücke 5 einer erfindungsgemäßen Positioniervorrichtung (Fig. 2) besteht im wesentlichen aus einem vorderen Brückenkörper 20 mit einer ersten Schiene 20a und einem hinteren Brükkenkörper 21 mit einer zweiten, über den Brückenkörper 21 rückseitig hinausragenden Schiene 21a, auf denen die in Tischquerrichtung 6 verfahrbaren Trägerschlitten 7, 8, 9, 10, 11 mit den Schneidköpfen 12, 13, 14, 15, 16 aufsitzen. Der Trägerschlitten 7 verfügt über einen Antrieb 22, der vorzugsweise als motorisch angetriebener Zahnstangenantrieb mit einem Servomotor 22a und einer Zahnstange 22b ausgebildet ist. Jeder nicht angetriebene Trägerschlitten 8, 9, 10, 11 verfügt über je eine Fixiereinrichtüng 23, 24, 25, 26, die die Verschiebbarkeit der Trägerschlitten 8, 9, 10, 11 gegenüber dem Brückenkörper 21 der Brücke 5 an einer beliebigen Stelle des Verfahrweges zeitweise blockieren kann. Vorteilhafterweise werden dazu Pneumatikzylinder 23a, 24a, 25a, 26a eingesetzt, deren Kolben 23b, 24b, 25b, 26b bei Betätigung die Trägerschlitten 8, 9, 10, 11 über Kupplungselemente 23c, 24c, 25c, 26c mit dem Brückenkörper 21, vorzugsweise reibschlüssig, verbinden. Die Kupplungselemente 23c, 24c, 25c, 26c sitzen dabei jeweils stirnseitig an den Kolben 23b, 24b, 25b, 26b, wodurch bei Betätigung der Pneumatikzylinder 23a, 24a, 25a, 26a ein reibschlüssiger Verbund zwischen den Schlitten 8, 9, 10, 11 und der Schiene 21a des Brückenkörpers 21 hergestellt wird. Dabei ist es wesentlich, die Schlitten 8, 9, 10, 11 an jeder beliebigen Stelle des Brückenkörpers vorzugsweise stufenlos gegebenenfalls aber auch schrittweise verbinden zu können (Fig. 3a, 3b). Dabei sind die Kolben 23b, 24b, 25b, 26b der Pneumatikzylinder ausgefahren und die Schlitten 8, 9, 10, 11 somit fixiert. Sind die Kolben 23b, 24b, 25b, 26b eingefahren (Fig. 3b), so sind die Schlitten 8, 9, 10, 11 entlang der Tischquerrichtung 6 frei bewegbar.

Ausgehend vom angetriebenen Trägerschlitten 7 sind jeweils zwei benachbarte Trägerschlitten 7, 8; 8, 9; 9, 10; 10, 11, Trägerschlittenpaare I, II, III, IV ausbildend paarweise über je eine im Querschnitt vorzugsweise kreisrunde Gleitstange 27, 28, 29, 30 miteinander verbunden, deren Längsachsen jeweils nebeneinander im Bereich zwischen den Brückenkörpern 20, 21 und parallel zur Tischquerrichtung 6 verlaufen. Die Längserstreckung der Gleitstangen 27, 28, 29, 30 begrenzt den maximalen Abstand zweier Schlitten eines Schlittenpaares. Die Gleitstangen 27 und 28 sind fest mit dem angetriebenen Trägerschlitten 7 bzw. dem Schlitten 8, die Gleitstangen 29 und 30 jeweils mit den Schlitten 10 bzw. 11 fest verbunden. Die jeweils anderen Trägerschlitten der Trägerschlittenpaare I, II, III, IV weisen je eine die Gleitstangen 27, 28, 29, 30 umgreifende Klemmeinrichtung 31, 32, 33, 34 auf, die über Betätigungszylinder 35, 36, 37, 38 geöffnet und geschlossen werden können. Die Gleitstangen 27, 28, 29, 30 sind zusammen mit den Klemmeinrichtungen 31, 32, 33, 34 unterhalb der Trägerschlitten 7, 8, 9, 10, 11 angeordnet. Die Betätigungszylinder 35, 36, 37, 38 sind oberhalb der Schlittenebene auf den Schlitten 8, 9, 10, angeordnet, wobei die Betätigungszylinder 35, 36, 37, 38 die Schlitten 8, 9, 10 durchgreifen und die Klemmeinrichtungen 31, 32, 33, 34 betätigen. Bei geöffneten Klemmeinrichtungen 31, 32, 33, 34 und gelösten Fixiereinrichtungen 23, 24, 25, 26 ist somit der Abstand zweier Trägerschlitten 7, 8, 9, 10, 11 stufenlos entlang der Brücke 5 einstellbar und durch Schließen der Klemmeinrichtungen 31, 32, 33, 34 arretierbar.

Weiterhin ist rückseitig am Brückenkörper 21 unterhalb der Schiene 21a parallel zur Brückenlängsachse ein Linearantrieb 39 angeordnet, der vorzugsweise aus zwei zweifach wirkenden Pneumatikzylindern 39a, 39b besteht, welche über ihre Bodenbereiche axial fluchtend miteinander verbunden sind. Der Zylinder 39a ist mit seiner Kolbenstange gelenkig in einer Konsole 39c gelagert, wobei die Konsole 39c an der Rückseite des Brückenkörpers 21 befestigt ist. An der Kolbenstange des Pneumatikzylinders 39b befindet sich ein Schieber 39d mit einem Puffer 39e und einer Rolle 39f, die auf einer zur Brückenlängsachse parallelen Schiene 40 abrollt. Die Schiene 40 ist einfach gekröpft ausgeführt und besteht aus einem oberen Abschnitt 40a, einem gegenüber dem oberen Abschnitt 40a abgesenkten unteren Abschnitt 40b und einem die Abschnitte 40a und 40b verbindenden S-förmigen Abschnitt 40c.

In Ruhestellung des Linearantriebes 39 befindet sich der Schieber 39d im Bereich des abgesenkten Abschnittes 40b und ist dabei derart angeordnet, daß die Schlitten 7, 8, 9, 10, 11 ungehindert entlang der Brückenlängsachse verfahrbar sind. Die Raumform der Schiene 40 ist so ausgeführt, daß bei Betätigung des Linearantriebes 39 der Puffer 39e beim Überfahren des Schienenabschnittes 40c mit dem über die Schiene 21a rückwärtig hinausragenden Bereich des Schlittens 11 in Kontakt kommt und dieser somit entlang der Brücke 5 in Richtung des angetriebenen Schlittens 7 verschoben werden kann. Bei gelösten Fixiereinrichtungen 23, 24, 25, 26 und gelösten Klemmeinrichtungen 31, 32, 33, 34 sind somit die Schlitten 7, 8, 9, 10, 11 beginnend mit dem Schlitten 11 nacheinander auf engstmöglichen Abstand zueinander verfahrbar (Bündelung).

Die Schlitten 7, 8, 9, 10, 11 verfügen zudem vorzugsweise über Anschlagelemente, z.B. Puffer (nicht gezeigt), die jeweils gegenüberliegend zwischen den Schlitten 7, 8, 9, 10, 11 angeordnet sind und eine Beschädigung der Schlitten bei der Bündelung verhindern sollen.

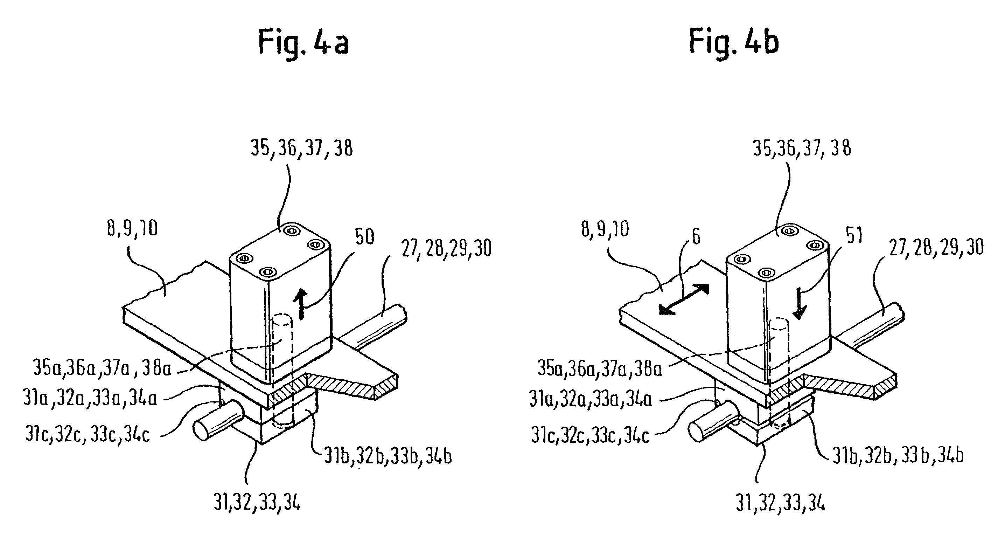

Die Klemmeinrichtungen 31, 32, 33, 34 (Fig. 4a) bestehen beispielsweise je aus einer oberen Klemmbacke 31a, 32a, 33a, 34a und aus einer unteren Klemmbacke 31b, 32b, 33b, 34b, die über eine Schwenkachse 31c, 32c, 33c, 34c gelenkig miteinander verbunden sind. Die oberen Klemmbacken 31a, 32a, 33a, 34a und die unteren Klemmbacken 31b, 32b, 33b, 34b weisen je eine in Richtung der Tischquerrichtung 6 verlaufende halbzylinderförmige Ausnehmung auf, die zum lösbaren Umgreifen der Gleitstangen 27, 28, 29, 30 dient. Die Betätigungszylinder 35, 36, 37, 38 besitzen je eine Kolbenstange 35a, 36a, 37a, 38a, die die Schlitten 8, 9, 10 und die oberen Klemmbacken 31a, 32a, 33a, 34a jeweils durchgreifen und die unteren Klemmbacken 31b, 32b, 33b, 34b betätigen. Werden die Kolbenstangen 35a, 36a, 37a, 38a entlang ihrer Betätigungsrichtung 50 bewegt, so schließen die Klemmeinrichtungen 31, 32, 33, 34, wodurch die Schlitten 8, 9, 10 auf den jeweiligen Gleitstangen 27, 28, 29, 30 festgelegt werden. Bei einer Klemmeinrichtung in gelöster Stellung (Fig. 4b) werden die Kolbenstangen 35a, 36a, 37a, 38a entlang einer der Betätigungsrichtung 50 entgegengesetzten Löserichtung 51 verfahren, wodurch die unteren Klemmbacken 31b, 32b, 33b, 34b eine gegenüber der geschlossenen Lage abgelenkte Position einnehmen und so die Klemmung zwischen den Schlitten 8, 9, 10 und den Gleitstangen 27, 28, 29, 30 lösen. Dadurch sind die entsprechenden Schlitten entlang der Tischquerrichtung 6 bezüglich den Gleitstangen bewegbar.

Dem vorderen Brückenkörper 20 vorgeordnet sitzen die Schneidköpfe 12, 13, 14, 15, 16, mit den Hilfsschneidköpfen 12a, 14a jeweils auf den Schneidkopfkonsolen 12e, 13e, 14e, 15e, 16e. Die Schneidkopfkonsolen 12e, 13e, 14e, 15e, 16e sind über je einen in einer zum Schneidtisch senkrechten bzw. vertikalen Richtung 41 wirkenden Linearantrieb 42 an die Trägerschlitten 7, 8, 9, 10, 11 angebunden. Die Linearantriebe 42 bestehen jeweils aus einem, vorzugsweise als Zahnrad ausgebildeten Antriebsteil 43 und einem, vorzugsweise als Zahnstange ausgebildeten Abtriebsteil 44, wobei die Antriebsteile 43, insbesondere ihre Nabenbohrungen 45 zueinander in Tischquerrichtung 6 fluchten, so daß die Linearantriebe 42 von nur einer Antriebswelle 46 synchron angetrieben werden können. Die Antriebsteile 43 sind dabei in Tischquerrichtung 6 verschiebbar auf der Antriebswelle 46 gelagert. Der zum korrekten Positionieren der Schneidköpfe 12, 13, 14, 15, 16 in der vertikalen Richtung 41 notwendige Verfahrweg kann dabei z. B. im Notbetrieb manuell in Abhängigkeit der Glasdicke für alle Schneidköpfe 12, 13, 14, 15, 16 gleichzeitig an der Getriebeeingangswelle, z. B. mit einer Kurbel (nicht gezeigt), eingestellt werden.

Zur Vermeidung der manuellen Einstellarbeiten ist zum vollautomatischen Betrieb der Anlage ein an einem Brückenausleger 47a befestigter Stellmotor 47 vorgesehen, der über an der Maschinensteuerung eingebbare Parameter für die Werkstückdicke und die Werkstückeigenschaften die korrekte Höhenpositionierung der Schneidköpfe 12, 13, 14, 15, 16 gewährleistet.

Zur Ausführung von freiprogrammierbaren Konturschnitten sind die um ihre vertikale Achse drehbaren Schneidradträger 12c, 13c, 14c, 15c, 16c motorisch um diese Achse antreibbar. Als Antrieb für die Schneidradträger 12c, 13c, 14c, 15c, 16c ist je ein im wesentlichen bekannter Winkelantrieb 56 vorgesehen, der vorzugsweise als Kegelradgetriebe mit einem Antriebskegelrad 57 und einem Abtriebskegelrad 58 ausgeführt ist. Dabei sind die Antriebskegelräder 57 jeweils derart in den Schneidkopfkonsolen 12e, 13e, 14e, 15e, gelagert, daß deren Nabenbohrungen 59 in Tischquerrichtung 6 fluchten, so daß alle Winkelantriebe 56 von einer gemeinsamen Antriebswelle 60 synchron angetrieben werden können. Analog zu Antriebsteilen 43 der Linearantriebe 42 sind die Antriebskegelräder 58 jeweils entlang der Tischquerrichtung 6 auf der gemeinsamen Antriebswelle 60 verschiebbar gelagert.

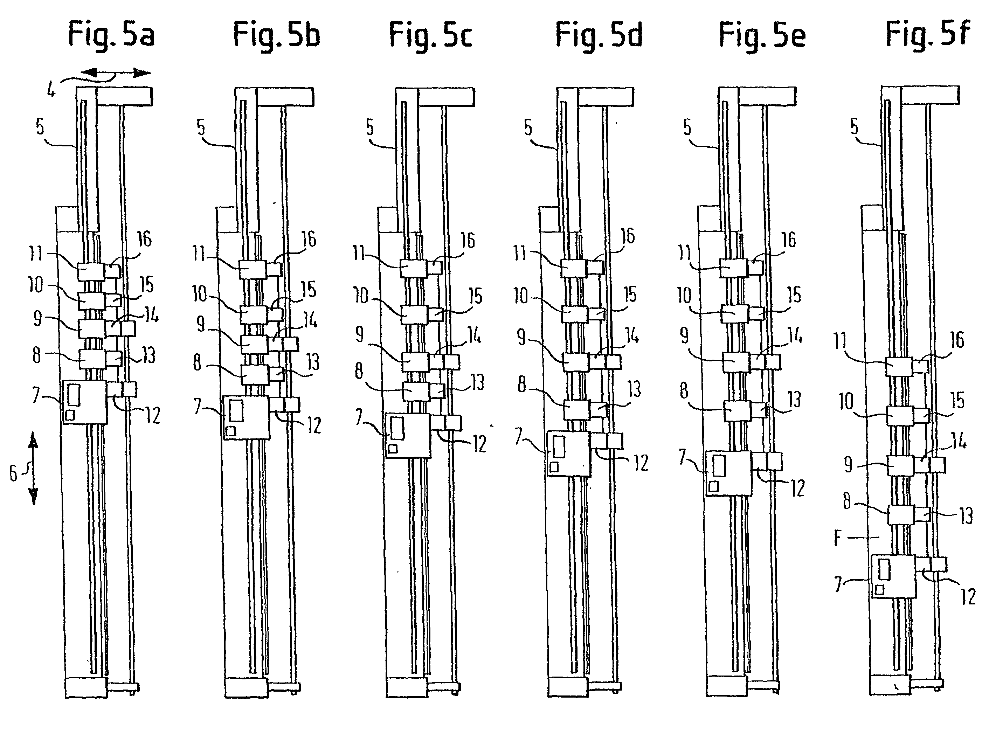

Im folgenden wird das Verfahren zur Positionierung der Schlitten entlang der Brücke 5 anhand der Funktionsweise einer Vorrichtung gemäß Figur 2 erläutert. Der zeitliche Ablauf eines Positioniervorganges ist vereinfacht in den Figuren 5a bis 5f dargestellt.

Zunächst wird als Ausgangslage definiert, daß alle Trägerschlitten 7, 8, 9, 10, 11 eine zueinander beliebige, feste Lage aufweisen, wobei die Klemmeinrichtungen 31, 32, 33, 34 betätigt sind und die Fixiereinrichtungen 23, 24, 25, 26 gelöst sind. Alle Trägerschlitten 7, 8, 9, 10, 11 sind somit zu einem "Mehrkopf-Block" verbunden.

Zuerst werden alle Klemmeinrichtungen 31, 32, 33, 34 gelöst, so daß alle nicht angetriebenen Trägerschlitten 8, 9, 10, 11 bezüglich des angetriebenen Trägerschlittens 7 frei entlang der Brückenlängsachse verschiebbar sind. Daraufhin werden die Pneumatikzylinder 39a, 39b, die vorzugsweise als Druckzylinder wirken, mit Druckluft beaufschlagt, so daß alle Trägerschlitten 7, 8, 9, 10, 11 auf engstmöglichen Abstand zueinander zusammengeschoben werden. Durch erneutes Aktivieren der Klemmeinrichtungen 31, 32, 33, 34 werden die Schlitten in dieser engstmöglichen Anordnung zueinander festgelegt. Danach wird der Linearantrieb 39 in seine Ausgangslage unterhalb des Verfahrbereiches der Schlitten 7, 8, 9, 10, 11 verfahren, so daß er keinerlei weitere Kräfte mehr auf die Schlitten 7, 8, 9, 10, 11 ausübt. Danach wird der Schlittenverbund durch den Antrieb 22 des Trägerschlittens 7 soweit entlang der Brücke 5 verfahren, bis der Schlitten 11 seine neue Sollposition erreicht hat (Zustand A; Figur 5a). An dieser Stelle wird die Fixiereinrichtung 26 des Trägerschlittens 11 betätigt, so daß der Schlitten 11 bezüglich der Brücke 5 ortsfest arretiert ist. Zeitgleich wird die den Schlitten 11 mit dem Schlitten 10 koppelende Klemmeinrichtung 34 über deren Betätigungszylinder 38 gelöst, so daß der resultierende Restverbund aus dem Trägerschlitten 7, 8, 9, 10 gegenüber dem Schlitten 11 verfahrbar ist. Anschließend wird der Restverbund aus den Trägerschlitten 7, 8, 9, 10 soweit verfahren bis Schlitten 10 seine neue Sollposition erreicht hat. Dort wird der Schlitten 10 analog zum Schlitten 11 ortsfest bezüglich der Brücke 5 arretiert und aus dem Verbund der Schlitten 7, 8, 9, 10 gelöst. Zeitgleich wird die den Schlitten 10 mit dem Schlitten 11 verbindende Klemmeinrichtung 34 über deren Betätigungszylinder 38 aktiviert (Zustand B; Figur 5b). Es resultiert zum einen ein Restverbund bestehend aus den Schlitten 7, 8, 9 und zum anderen ein neuer Verbund aus den bereits positionierten Schlitten 10, 11 (Zustand C; Figur 5c). Die Schlitten 8, 9 werden in vorbeschriebener Art und Weise ebenfalls jeweils an deren Sollpositionen positioniert, bezüglich der Brücke 5 arretiert und mit dem neuen Verbund der positionierten Schlitten gekoppelt (Zustand D; Figur 5d). Zuletzt wird der angetriebene Träaerschlitten 7 in seine neue Sollposition verfahren (Zustand E; Figur 5e). Somit befinden sich im Zustand E alle Schlitten 7, 8, 9, 10, 11 in ihrer neuen Sollposition, wobei die nicht angetriebenen Schlitten 8, 9, 10, 11 jeweils an der Brücke 5 arretiert sind und alle Klemmeinrichtungen 31, 32, 33, 34 zwischen den Schlitten 7, 8, 9, 10, 11 aktiviert sind, so daß ein neuer Gesamtverbund aus positionierten Schlitten 7, 8, 9, 10, 11 vorliegt. Ausgehend vom Zustand E werden alle Fixiereinrichtungen 23, 24, 25, 26 der Trägerschlitten 8, 9, 10, 11 gelöst, so daß der neue Gesamtverbund über den Schlitten 7 entlang der Brücke 5 verfahren werden kann. Abschließend wird der neue Gesamtverbund aus den Trägerschlitten 7, 8, 9, 10, 11 mit den in der jeweiligen neuen Sollposition befindlichen Schlitten 7, 8, 9, 10, 11 und deren Schneidköpfen 12, 13, 14, 15, 16 in eine für den Beginn einer neuen Schneidoperation günstige Ausgangsposition verfahren (zustand F; Figur 5f).

Abweichend von dem oben beschriebenen Verfahrensablauf können die Schlitten (7, 8, 9, 10, 11), welche ihre Sollposition erreicht haben und aus dem Verbund gelöst wurden, zunächst nur über die jeweiligen Fixiereinrichtungen 23, 24, 25, 26 an der Brücke 5 arretiert werden. Die Klemmeinrichtungen 31, 32, 33, 34 zwischen den bereits positionierten Schlitten bleiben dabei zunächst in gelöster Stellung. Nach Abschluß der Positionierung der einzelnen Trägerschlitten 7, 8, 9, 10, 11 (Zustand E; Figur 5e) werden zuerst alle Klemmeinrichtungen 31, 32, 33, 34 betätigt, so daß ein neuer Gesamtverbund aus den positionierten Trägerschlitten 7, 8, 9, 10, 11 gebildet wird. Nahezu zeitgleich oder in kurzem zeitlichen Abstand darauffolgend werden alle Fixiereinrichtungen 23, 24, 25, 26 der Trägerschlitten 8, 9, 10 gelöst, so daß der neue Gesamtverbund über den Schlitten 7 entlang der Brücke 5 verfahren werden kann. Abschließend wird der neue Gesamtverbund analog zum oben beschriebenen Verfahren in eine für den Beginn einer neuen Schneidoperation günstige Ausgangsposition verfahren (Zustand F; Fig. 5f).

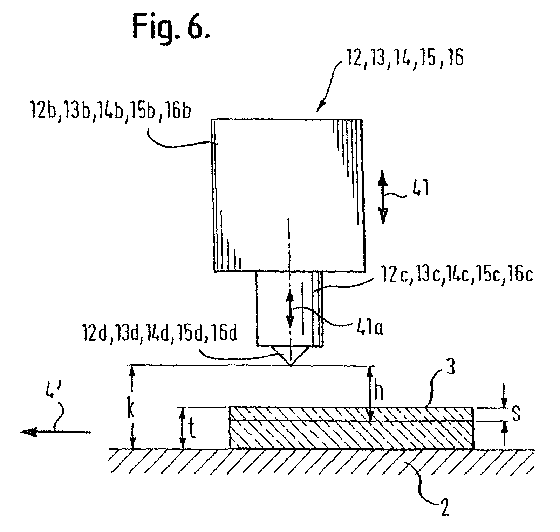

Die vertikale Vorpositionierung der Schneidköpfe wird im folgenden anhand eines schematisch dargestellten Anwendungsfalles (Fig. 6) erläutert.

Dabei ist das Maß k der einzustellende Abstand der Schneidkörper 12d, 13d, 14d, 15d, 16d von der Oberfläche des Schneidtisches 2. Das Maß t stellt die Dicke der zu bearbeitenden Rohglasplatten 3 dar. Die Strecke s ist die für das Schneiden der Glasplatte 3 notwendige Eindringtiefe der Schneidkörper 12d, 13d, 14d, 15d, 16d in die Oberfläche der Glasplatte 3. Der Wert für das Maß s ist dabei im wesentlichen abhängig von der Glasdicke t, den werkstoffspezifischen Eigenschaften des zu schneidenden Glases wie beispielsweise der Glassorte, der Glashärte und ist entweder einem Mehrachsenkennfeld zu entnehmen oder im Hinblick auf Oberflächen- und Brechqualität der auszuschneidenden Glasteile empirisch zu ermitteln. Der Hub h ist ein bauartbedingter, schneidkopfspezifischer Wert der für alle Schneidköpfe 12, 13, 14, 15 und 16 konstant und gleich ist und beispielsweise 5 mm beträgt.

Als Ausgangsstellung ist jeder Zustand der Schneidköpfe 12, 13, 14, 15, 16 möglich, bei dem sich die Schneidkopfträger 12c, 13c, 14c, 15c, 16c gegenüber den Schneidkopfgehäusen 12b; 13b, 14b, 15b, 16b in ihrer oberen eingefahrenen Endstellung befinden und die Schneidköpfe 12, 13, 14, 15 und 16 derart entlang der vertikalen Vorpositionierungsrichtung 41 positioniert sind, daß ein Maß k resultiert, welches größer ist als die Dicke t der zu bearbeitenden Glasplatte 3, so daß ein Zuführen der Glasplatte 3 in einer zur Tischlängsrichtung 4 parallelen Richtung 4' bis unter die Schneidkörper 12d, 13d, 14d, 15d, 16d möglich ist.

In Arbeitsstellung befinden sich die Schneidkopfgehäuse 12b, 13b, 14b, 15b, 16b in vertikaler Richtung 41 in vorpositionierter Stellung, wobei die Schneidkörperträger 12c, 13c, 14c, 15c, 16c gegenüber den jeweiligen Schneidkopfgehäusen 12b, 13b, 14b, 15b, 16b jeweils um den Hub h ausgefahren sind, so daß die Schneidkörper 12d, 13d, 14d, 15d, 16d um *den* Betrag s in die Glasplatte 3 eindringen.

Ausgehend von der Ausgangsstellung werden die Werte für die Dicke t der zu bearbeitenden Glasplatte 3 (1 mm ≤ t ≤ 19 mm), der Wert h und der Wert s als Parameter an der Maschinensteuerung eingegeben, welche aus den gegebenen Größen den Wert k = t - s + h ermittelt und in ein Steuersignal für den Stellmotor 47 umwandelt. Der Stellmotor 47 wird entsprechend des Steuersignales angesteuert, so daß die Schneidköpfe 12, 13, 14, 15, 16 über die Linearantriebe 42 jeweils entlang der vertikalen Richtung 41 solange verfahren werden, bis sich die Schneidräder 12d, 13d, 14d, 15d, 16d jeweils den Abstand k von der Schneidtischoberfläche befinden. Zu Beginn des Schneidvorganges werden nun die Schneidkörperträger 12c, 13c, 14c, 15c, 16c um den Wert h entlang ihrer Zustellachse 41a abgesenkt, so daß die Schneidkörper 12d, 13d, 14d, 15d um den Betrag s in die Glasplatte 3 eindringen. Ausgehend von dieser Stellung wird der Konturenschneidvorgang gestartet.

Vorteilhafterweise kann zur Steigerung des Automatisierungsgrades die Glasdicke t der zugeführten Glasplatten vor dem Positioniervorgang automatisch gemessen werden. Hierfür eignen sich beispielsweise Meßsensoren, die die Glasplattendicke t, z. B. elektromechanisch, optisch oder kapazitiv ermitteln und ein Ausgangssignal für die Maschinensteuerung bereitstellen. Das Ausgangssignal wird dann als Eingabeparameter an die Maschinensteuerung weitergeleitet, wobei die Höhenpositionierung der Schneidköpfe 12, 13, 14, 15, 16 in Abhängigkeit des Sensorsignales durchgeführt wird.

Zudem ist es zweckmäßig, z. B. in einer Notbetriebssituation, die vertikale Höhenpositionierung manuell, z. B. mit einem an der Antriebswelle 46 der Linearantriebe 42 angebrachten Handrad, vorzunehmen.

Ein derartiges Verfahren zur Positionierung von Bearbeitungsköpfen einer Mehrkopfbearbeitungsmaschine entlang zweier Raumachsen reduziert somit wirksam die erforderlichen Rüstzeiten z. B. bei einem Wechsel der Schneidkonturen oder bei einer Änderung der Dicke oder der Werkstoffeigenschaften der zu bearbeitenden Glasplatten. Zudem ist durch die zusätzliche Vorpositionierung der Schneidköpfe entlang der zur Werkstückoberfläche senkrechten Achse eine deutliche Qualitätssteigerung des Schnittes insbesondere im Bereich des Aufsetzpunktes der Schneidräder auf der Glasoberfläche erreichbar. Eine derartige Anlage ist somit aufgrund ihrer höheren Prozeßsicherheit und den geringeren erforderlichen Taktzeiten sehr wirtschaftlich und kostengünstig einsetzbar.

## Patentansprüche

1. Verfahren zum Positionieren von mehreren nebeneinander entlang einer zu einer Werkstückoberfläche parallelen Raumachse angeordneten Bearbeitungsköpfen, entlang der Raumachse, insbesondere von an einer Maschinenbrücke (5) angebrachten Schneidköpfen (12, 13, 14, 15, 16) einer numerisch gesteuerten Mehrkopf-Glasschneideanlage, wobei je ein Schneidkopf (12, 13, 14, 15, 16) einem in Brückenlängsrichtung (4) verfahrbaren Schlitten zugeordnet ist, und mindestens ein Schlitten (7) in Brückenlängsrichtung (4) steuerbar angetrieben wird,
**dadurch gekennzeichnet, daß**
A) die Schlitten (7, 8, 9, 10, 11) einen Verbund bildend aneinander gekoppelt werden,
B) die gekoppelten Schlitten (7, 8, 9, 10, 11) nacheinander an eine vorbestimmte Sollposition an der Brücke (5) gefahren werden und die dort zu positionierenden Schlitten (7, 8, 9, 10, 11) nacheinander aus der Kopplung gelöst und bis auf den zuletzt positionierten angetriebenen Schlitten (7) ortsfest arretiert werden,
C) die positionierten und arretierten Schlitten (7, 8, 9, 10, 11) einen Verbund aus positionierten Schlitten (7, 8, 9, 10, 11) bildend aneinander gekoppelt werden,
D) die Arretierungen der einzelnen Schlitten (8, 9, 10, 11) gelöst werden, so daß der Verbund aus aneinander gekoppelten Schlitten (7, 8,9, 10, 11) in seiner Gesamtheit entlang der Brückenlängsachse (6) verschiebbar ist.

2. Verfahren nach Anspruch 1, **dadurch gekennzeichnet, daß** die einen Verbund bildenden aneinander gekoppelten Schlitten (7, 8, 9, 10, 11) in engstmöglicher Anordnung gekoppelt werden.

3. Verfahren nach Anspruch 1 und/oder 2,
**dadurch gekennzeichnet, dass** auch der zuletzt positionierte angetriebene Schlitten (7) arretiert wird.

4. Verfahren nach einem oder mehreren der Ansprüche 1 bis 3, **dadurch gekennzeichnet, daß** der Verbund aus positionierten Schlitten (7, 8, 9, 10, 11) erst gebildet wird, nachdem alle Schlitten (7, 8, 9, 10, 11) positioniert und arretiert worden sind.

5. Verfahren nach einem oder mehreren der Ansprüche 1 bis 4, **dadurch gekennzeichnet, daß** zur Anordnung der Schlitten (7, 8, 9, 10, 11) in geringstmöglichem axialen Abstand die nicht angetriebenen Schlitten (8, 9, 10, 11) zum angetriebenen Schlitten (7) hin verschoben werden und daß jeweils derjenige Schlitten (8, 9, 10, 11) des Verbundes aus den engstmöglich angeordneten Schlitten positioniert und arretiert wird, welcher am weitesten vom angetriebenen Schlitten (7) entfernt ist.

6. Verfahren nach einem oder mehreren der Ansprüche 1 bis 5, **dadurch gekennzeichnet, daß** die Bildung des Verbundes durch jeweils paarweise gestaffelte Kopplung zweier benachbarter Schlitten (7, 8, 9, 10, 11) erfolgt.

7. Verfahren nach einem oder mehreren der Ansprüche 1 bis 6, **dadurch gekennzeichnet, daß** die Arretierungen der einzelnen Schlitten (7, 8, 9, 10, 11) gelöst werden, sobald sich der angetriebene Schlitten (7) in seiner Sollposition befindet und der Verbund aus den positionierten Schlitten (7, 8, 9, 10, 11) gebildet ist.

8. Verfahren nach einem oder mehreren der Ansprüche 1 bis 7, **dadurch gekennzeichnet, daß** die Arretierung der Schlitten (7, 8, 9, 10, 11) an der Brücke (5) erfolgt.

9. Verfahren nach einem oder mehreren der vorhergehenden Ansprüche,
**dadurch gekennzeichnet,**
**daß** mindestens ein Bearbeitungskopf, insbesondere ein Schneidkopf (12, 13, 14, 15, 16) entlang einer zur Werkstückoberfläche senkrechten Raumachse positioniert wird, wobei Werkstücke, insbesondere ebene Glasplatten (3) unterschiedlicher Dicke, bearbeitet werden und Teilbereiche des Schneidkopfes (12, 13, 14, 15, 16), insbesondere ein Schneidkörper (12d, 13d, 14d, 15d, 16d) zu Beginn des Arbeitszykluses von einer, von der Werkstückoberfläche entfernten bestimmten Ausgangsstellung, in eine Arbeitsstellung gebracht werden, in der er in die Werkstückoberfläche eindringt, wobei der Abstand zwischen der Ausgangsstellung des Schneidkörpers (12d, 13d, 14d, 15d, 16d) und der Arbeitsstellung des Schneidkörpers (12d, 13d, 14d, 15d) konstant gehalten wird und vor Beginn des Arbeitszykluses die Schneidkörper (12d, 13d, 14d, 15d, 16d) derart bezüglich des Abstandes zur Werkstückoberfläche in die Ausgangsstellung vorpositioniert werden, daß die Schneidkörper (12d, 13d, 14d, 15d, 16d) in der Arbeitsstellung um eine vorbestimmte Eindringtiefe in das Werkstück eindringen.

10. Verfahren nach Anspruch 9,
**dadurch gekennzeichnet, daß** die Positionierung durch vorzugsweise synchrones Anheben und Absenken der Schneidkörper (12d, 13d, 14d, 15d, 16d) erfolgt oder daß die Positionierung durch Anheben und Absenken der Glasplatte (3) erfolgt oder daß die Positionierung durch Anheben und Absenken der Brücke (5) erfolgt.

11. Vorrichtung zum Positionieren von Bearbeitungsköpfen zugeordneten Bearbeitungsmitteln einer Mehrkopfbearbeitungsmaschine, insbesondere Schneidköpfen (12, 13, 14, 15, 16) zugeordnete Schneidkörper (12d, 13d, 14d, 15d, 16d) einer Mehrkopfglasschneideanlage (1) mit einer einen Schneidtisch (2) überspannenden, entlang der Tischlängsachse (4) angetriebenen Brücke (5), an der mehrere Schneidköpfe (12, 13, 14, 15, 16) entlang einer Brückenlängsachse (6) unabhängig voneinander nebeneinander verschiebbar angeordnet sind, wobei mindestens ein Schneidkopf (12) entlang der Brückenlängsachse antreibbar ist, insbesondere Vorrichtung zur Durchführung des Verfahrens nach einem der Ansprüche 1 bis 8,
**dadurch gekennzeichnet, daß** die Schneidköpfe (12, 13, 14, 15, 16) jeweils einem Schlitten (7, 8, 9, 10, 11) zugeordnet sind, welche unabhängig voneinander entlang der Brükkenlängsachse verschiebbar angeordnet sind, wobei die Schlitten (7, 8, 9, 10, 11) zudem jeweils unabhängig voneinander betätigbare, lösbare Kopplungseinrichtungen (27, 31, 35; 28, 32, 36; 29, 33, 37; 30, 34, 38) zur Kopplung aneinander beziehungsweise hintereinander aufweisen, wobei die nicht angetriebenen Schlitten (8, 9, 10, 11) unabhängig voneinander betätigbar lösbare Fixiereinrichtungen (23, 24, 25, 26) zum ortsfesten Fixieren der Schlitten (8, 9, 10, 11) an der Brücke (5) aufweisen und Mittel zum Betätigen der Kopplungseinrichtungen (27, 31, 35; 28, 32, 36; 29, 33, 37; 30, 34, 38), der Fixiereinrichtungen (23, 24, 25, 26) und des Antriebs des mindestens einen angetriebenen Schlittens (7) vorhanden sind.

12. Vorrichtung nach Anspruch 11,
**dadurch gekennzeichnet,**
**daß** die Schneidköpfe (12, 13, 14, 15, 16) jeweils an einer Schneidkopfkonsole (12e, 13e, 14e, 15e, 16e) befestigt sind, welche brückenvorderseitig an den Schlitten (7, 8, 9, 10, 11) sitzen.

13. Vorrichtung nach Anspruch 11 und/oder 12,
**dadurch gekennzeichnet,**
**daß** einzelnen Schneidköpfen Hilfsschneidköpfe (12a, 14a) zugeordnet sind, die vorzugsweise für geradlinige Grobzuschnitte einer Glasplatte (3) oder für Hilfsschnitte eingesetzt werden.

14. Vorrichtung nach einem oder mehreren der Ansprüche 11 bis 13,
**dadurch gekennzeichnet,**
**daß** die Schneidköpfe (12, 13, 14, 15, 16) im wesentlichen aus je einem Schneidkopfgehäuse (12b, 13b, 14b, 15b, 16b) und einem Schneidkörperträger (12c, 13c, 14c, 15c, 16c) bestehen, wobei die Schneidkörperträger (12c, 13c, 14c, 15c, 16c) gegenüber den Schneidkopfgehäusen (12b, 13b, 14b, 15b, 16b) entlang einer zur Werkstückoberfläche senkrechten Zustellachse (41a) axial verschiebbar und um diese Achse drehbar gelagert und antreibbar sind und daß die Schneidkörper (12d, 13d, 14d, 15d) in den Schneidkörperhaltern (12c, 13c, 14c, 15c, 16c) aufgenommen sind und beispielsweise als Schneidrädchen ausgebildet sind.

15. Vorrichtung anch einem oder mehreren der Ansprüche 11 bis 14,
**dadurch gekennzeichnet,**
**daß** die Brücke (5) im wesentlichen aus einem vorderen Brückenkörper (20) mit einer ersten Schiene (20a) und einem hinteren Brückenkörper (21) mit einer zweiten Schiene (21a) besteht, auf denen die Schlitten (7, 8, 9, 10, 11) aufsitzen.

16. Vorrichtung nach einem oder mehreren der Ansprüche 11 bis 15,
**dadurch gekennzeichnet,**
**daß** der Trägerschlitten (7) über einen Antrieb (22) entlang der Brückenlängsachse verfügt.

17. Vorrichtung nach einem oder mehreren der Ansprüche 11 bis 16,
**dadurch gekennzeichnet,**
**daß** der Antrieb (22) als elektromotorisch angetriebener Zahnstangenantrieb ausgeführt ist.

18. Vorrichtung nach einem oder mehreren der Ansprüche 11 bis 17,
**dadurch gekennzeichnet,**
**daß** die Fixiereinrichtungen (23, 24, 25, 26) jeweils aus einer Kolbenzylindereinheit mit an den Kolbenstirnseiten angebrachten Kupplungselementen (23c, 24c, 25c, 26c) bestehen und daß die Kopplungseinrichtungen jeweils als eine, jeweils eine Gleitstange (27, 28, 29, 30) umgreifende Klemmeinrichtung (31, 32, 33, 34) ausgebildet sind und daß zur Betätigung der Klemmeinrichtungen Betätigungszylinder (35, 36, 37, 38) vorgesehen sind.

19. Vorrichtung nach einem oder mehreren der Ansprüche 11 bis 18,
**dadurch gekennzeichnet,**
**daß** die Gleitstangen (27, 28, 29, 30) und die Klemmeinrichtungen (31, 32, 33, 34) unterhalb der Schlitten (7, 8, 9, 10, 11) angeordnet sind und die zugehörigen Betätigungszylinder (35, 36, 37, 38) oberhalb der Schlittenebene an den Schlitten (8, 9, 10) angeordnet sind, wobei die Betätigungszylinder (35, 36, 37, 38) die Schlitten (8, 9, 10) durchgreifen und die Klemmeinrichtungen (31, 32, 33, 34) betätigen.

20. Vorrichtung nach einem oder mehreren der Ansprüche 11 bis 19,
**dadurch gekennzeichnet,**
**daß** rückseitig am Brückenkörper (21) unterhalb der Schiene (21a) parallel zur Brückenlängsachse ein Linearantrieb (39) angeordnet ist, der vorzugsweise aus zwei zweifach wirkenden Pneumatikzylindern (39a, 39b) besteht, welche über ihre Bodenbereiche axial fluchtend miteinander verbunden sind und daß der Linearantrieb einendig gelenkig in einer an der Rückseite des Brückenkörpers (21) befestigten Konsole (39c) gelenkig gelagert ist, anderendig einen Schieber (39d) mit einem Puffer (39e) und einer Rolle (39f) aufweist, welche auf einer zur Brückenlängsachse parallelen Schiene (40) abrollt und daß die Schiene (40) einfach gekröpft ausgeführt ist und einen oberen Abschnitt (40a) und einen gegenüber dem oberen Abschnitt (40a) abgesenkten unteren Abschnitt (40b) besitzt und daß der Linearantrieb (39) in seiner Ruhestellung derart angeordnet ist, daß die Schlitten (7, 8, 9, 10, 11) ungehindert entlang der Brückenlängsachse verfahrbar sind.

21. Vorrichtung nach einem oder mehreren der Ansprüche 11 bis 20,
**dadurch gekennzeichnet,**
**daß** der Linearantrieb (39) derart ausgeführt ist, daß bei Betätigung des Linearantriebs (39) der Puffer (39e) beim Überfahren der Schiene (40) mit dem über die Schiene (21a) rückwärtig hinausragenden Bereich des Schlittens (11) in Kontakt kommt und diesen somit entlang der Brücke (5) in Richtung des angetriebenen Schlittens (7) verschiebt.

22. Vorrichtung nach einem oder mehreren der Ansprüche 11 bis 21,
**dadurch gekennzeichnet,**
**daß** Teilbereiche der Schneidköpfe (12, 13, 14, 15, 16), insbesondere Schneidkörper (12d, 13d, 14d, 15d, 16d) in einer Ausgangsstellung beabstandet zu einer Werkstückoberfläche angeordnet sind und in einer Arbeitsstellung in die Werkstückoberfläche eindringend angeordnet sind, wobei der Abstand zwischen der Ausgangsstellung und der Arbeitsstellung der Schneidkörper (12d, 13d, 14d, 15d, 16d) konstant ist und Einrichtungen zur Einstellung des Abstandes zwischen Werkstückoberfläche und den in Ausgangsstellung befindlichen Schneidkörpern (12d, 13d, 14d, 15d, 16d) vorhanden sind und Einrichtungen vorhanden sind, um den Schneidkörper (12d, 13d, 14d, 15d, 16d) von der Ausgangsstellung in die Arbeitsstellung zu bringen.

23. Vorrichtung nach Anspruch 22,
**dadurch gekennzeichnet,**
**daß** die Einrichtungen zur Einstellung des Abstandes zwischen der Werkstückoberfläche und den in Ausgangsstellung befindlichen Schneidkörpern (12d, 13d, 14d, 15d, 16d) die Schneidkörper (12d, 13d, 14d, 15d, 16d) bewegende Einrichtungen sind und/oder die Einrichtungen zur Einstellung des Abstandes zwischen Werkstückoberfläche und den in Ausgangsstellung befindlichen Schneidkörpern das Werkstück bewegende Einrichtungen sind und/oder die Einrichtungen zur Einstellung des Abstandes zwischen Werkstückoberfläche und den in Ausgangsstellung befindlichen Schneidkörpern (12d, 13d, 14d, 15d, 16d) die Brücke bewegende Einrichtungen sind.

24. Vorrichtung nach Anspruch 22 und/oder 23,
**dadurch gekennzeichnet,**
**daß** die die Schneidkörper bewegenden Einrichtungen Linearantriebe (42) sind, z. B. Zahnstangenantriebe, welche synchron antreibbar und jeweils auf die Schneidkopfkonsolen (12e, 13e, 14e, 15e, 16e) wirkend ausgeführt sind.

## Claims

1. Method for the positioning of several machining heads arranged next to one another along a spatial axis parallel to a workpiece surface, along the said spatial axis, in particular for positioning the cutter heads (12, 13, 14, 15, 16) of a numerically controlled, multiple-head glass cutting machine attached to a machine bridge (5), such that in each case one cutter head (12, 13, 14, 15, 16) is associated with one sliding carriage that can move along the longitudinal direction (4) of the bridge, and at least one sliding carriage (7) is driven under control in the longitudinal direction (4) of the bridge,
**characterised in that**
A) the sliding carriages (7, 8, 9, 10, 11) are coupled to one another to form a compound group,
B) the coupled sliding carriages (7, 8, 9, 10, 11) move one after another to a predetermined nominal position on the bridge (5), and the sliding carriages (7, 8, 9, 10, 11) to be positioned there are released one after the other from the coupling and locked in fixed positions until the last, driven sliding carriage (7) has been positioned,
C) the positioned and locked sliding carriages (7, 8, 9, 10, 11) are coupled to one another to form a compound group of positioned sliding carriages (7, 8, 9, 10, 11),
D) the locking of individual sliding carriages (8, 9, 10, 11) is released, so that the whole of the compound group consisting of sliding carriages (7, 8, 9, 10, 11) coupled to one another can be moved along the longitudinal axis (6) of the bridge.

2. Method according to Claim 1,
**characterised in that**
the sliding carriages (7, 8, 9, 10, 11) coupled to one another to form a compound group are coupled in the narrowest possible arrangement.

3. Method according to Claim 1,
**characterised in that**
the driven sliding carriage (7) positioned last is also locked.

4. Method according to one or more of Claims 1 to 3,
**characterised in that**
the compound group of positioned sliding carriages (7, 8, 9, 10, 11) is only formed after all the sliding carriages (7, 8, 9, 10, 11) have been positioned and locked.

5. Method according to one or more of Claims 1 to 4,
**characterised in that**
to arrange the sliding carriages (7, 8, 9, 10, 11) within the shortest possible axial distance, the non-driven sliding carriages (8, 9, 10, 11) are pushed towards the driven carriage (7), and in each case whichever carriage (8, 9, 10, 11) of the compound group of carriages arranged in as narrow a formation as possible is furthest away from the driven carriage (7), is positioned and locked.

6. Method according to one or more of Claims 1 to 5,
**characterised in that**
the compound group is formed by coupling together respective staggered pairs of two adjacent sliding carriages (7, 8, 9, 10, 11).

7. Method according to one or more of Claims 1 to 6,
**characterised in that**
the locking of individual sliding carriages (7, 8, 9, 10, 11) is released as soon as the driven carriage (7) is in its nominal position and the compound group of positioned carriages (7, 8, 9, 10, 11) has been formed.

8. Method according to one or more of Claims 1 to 7,
**characterised in that**
the locking of the sliding carriages (7, 8, 9, 10, 11) takes place on the bridge (5).

9. Method according to one or more of the preceding claims,
**characterised in that**
at least one machining head, in particular a cutter head (12, 13, 14, 15, 16), is positioned along a spatial axis perpendicular to the workpiece surface, such that workpieces, in particular flat glass plates (3) of various thicknesses are machined, and parts of the cutter head (12, 13, 14, 15, 16), in particular a cutting body (12d, 13d, 14d, 15d, 16d), move at the beginning of the working cycle from a determined initial position a distance away from the workpiece surface to a working position in which they penetrate into the workpiece surface, the distance between the initial position of the cutting bodies (12d, 13d, 14d, 15d, 16d) and the working position of the cutting bodies (12d, 13d, 14d, 15d, 16d) being held constant and, before the beginning of the working cycle, the cutting bodies (12d, 13d, 14d, 15d, 16d) are pre-positioned as regards their distance from the workpiece surface in the initial position, in such manner that the cutting bodies (12d, 13d, 14d, 15d, 16d) in their working position penetrate a predetermined depth into the workpiece.

10. Method according to Claim 9,
**characterised in that**
the positioning is carried out preferably by synchronous raising and lowering of the cutting bodies (12d, 13d, 14d, 15d, 16d) or the positioning is carried out by raising and lowering the glass plate (3), or the positioning is carried out by raising and lowering the bridge (5).

11. Device for the positioning of machining means associated with the machining heads of a multiple-head machining unit, in particular cutting bodies (12d, 13d, 14d, 15d, 16d) associated with the cutter heads (12, 13, 14, 15, 16) of a multiple-head glass cutting machine (1) with a driven bridge (5) that spans across a cutting table (2) along the longitudinal axis (4) of the table, on which several cutter heads (12, 13, 14, 15, 16) are arranged next to one another and can move independently of one another along a longitudinal axis (6) of the bridge, such that at least one cutter head (12) can be driven along the longitudinal axis of the bridge, in particular a device for implementing the method according to Claims 1 to 8,
**characterised in that**
each cutter head (12, 13, 14, 15, 16) is associated with a sliding carriage (7, 8, 9, 10, 11), the carriages being able to move independently of one another along the longitudinal axis of the bridge, and in addition the sliding carriages (7, 8, 9, 10, 11) comprise coupling mechanisms (27, 31, 35; 28, 32, 36; 29, 33, 37; 30, 34, 38) that can be actuated or released independently of one another to couple the carriages to or after one another, the non-driven carriages (8, 9, 10, 11) having fixing devices (23, 24, 25, 26) that can be actuated and released independently to fix the position of the carriages (8, 9, 10, 11) on the bridge (5), means being provided for actuating the coupling mechanisms (27, 31, 35; 28, 32, 36; 29, 33, 37; 30, 34, 38), fixing devices (23, 24, 25, 26) and drive system of the at least one driven sliding carriage (7).

12. Device according to Claim 11,
**characterised in that**
the cutter heads (12, 13, 14, 15, 16) are in each case attached to a cutter head console (12e, 13e, 14e, 15e, 16e) and the cutter head consoles are positioned on the sliding carriages (7, 8, 9, 10, 11) on the front side of the bridge.

13. Device according to Claims 11 and/or 12,
**characterised in that**
auxiliary cutter heads (12, 13, 14, 15, 16) are associated with individual cutter heads, which are preferably used for the rough cutting to size of a glass plate (3) or for auxiliary cuts.

14. Device according to one or more of Claims 11 to 13,
**characterised in that**
the cutter heads (12, 13, 14, 15, 16) each consist essentially of a cutter head housing (12b, 13b, 14b, 15b, 16b) and a cutting body carrier (12c, 13c, 14c, 15c, 16c), the cutting body carrier (12c, 13c, 14c, 15c, 16c) being movable relative to the cutter head housing (12b, 13b, 14b, 15b, 16b) along an adjustment axis (41a) perpendicular to the workpiece surface and being able to rotate about the said axis and to be driven, and the cutting bodies (12d, 13d, 14d, 15d, 16d) being held in the cutting body holders (12c, 13c, 14c, 15c, 16c) and being formed, for example, as small cutting wheels.

15. Device according to one or more of Claims 11 to 14,
**characterised in that**
the bridge (5) consists essentially of a front bridge element (20) with a first rail (20a) and a rear bridge element (21) with a second rail (21a), on which the sliding carriages (7, 8, 9, 10, 11) are seated.

16. Device according to one or more of Claims 11 to 15,
**characterised in that**
the support carriage (7) has a drive system (22) to drive it along the longitudinal axis of the bridge.

17. Device according to one or more of Claims 11 to 16,
**characterised in that**
the drive system (22) is formed as a rack-and-pinion drive operated by an electric motor.

18. Device according to one or more of Claims 11 to 17,
**characterised in that**
the fixing devices (23, 24, 25, 26) consist in each case of a piston/cylinder unit with coupling elements (23c, 24c, 25c, 26c) fitted on the end of the piston, and the coupling mechanisms consist in each case of a clamping device (31, 32, 33, 34) that grips a respective slide-rod (27, 28, 29, 30), and to actuate the clamping device actuation cylinders (35, 36, 37, 38) are provided.

19. Device according to one or more of Claims 11 to 18,
**characterised in that**
the slide-rods (27, 28, 29, 30) and the clamping devices (31, 32, 33, 34) are arranged under the sliding carriages (7, 8, 9, 10, 11) and the associated actuation cylinders (35, 36, 37, 38) are arranged above the plane of the carriages on the carriages (8, 9, 10), such that the actuation cylinders (35, 36, 37, 38) extend through the carriages (8, 9, 10) and actuate the clamping devices (31, 32, 33, 34).

20. Device according to one or more of Claims 11 to 19,
**characterised in that**
at the rear of the bridge element (21) under the rail (21a) parallel to the longitudinal axis of the bridge, is arranged a linear drive (39) preferably consisting of two dual-action pneumatic cylinders (39a, 39b), these being axially aligned and connected to one another at their bottom ends, the said linear drive being hinged at one end to a console (39c) attached on the rear of the bridge element (21) and having at the other end a slide (39d) with a buffer (39e) and a roller (39f) that rolls along a rail (40) parallel to the longitudinal axis of the bridge, and the rail (40) is simply bent through an angle and has an upper section (40a) and a lower section (40b) below the upper section (40a), and in its rest position the linear drive (39) is positioned so that the sliding carriages (7, 8, 9, 10, 11) can move unhindered along the longitudinal axis of the bridge.

21. Device according to one or more of Claims 11 to 20,
**characterised in that**
the linear drive (39) is constructed such that when the linear drive (39) is actuated, the buffer (39e) moves over the rail (40) and comes in contact with the part of the sliding carriage (11) that projects to the rear over the rail (21a) and so pushes the carriage along the bridge (5) in the direction of the driven sliding carriage (7).

22. Device according to one or more of Claims 11 to 21,
**characterised in that**
parts of the cutter heads (12, 13, 14, 15, 16) and in particular their cutting bodies (12d, 13d, 14d, 15d, 16d) are arranged in an initial position a distance away from a workpiece surface and, are arranged in a working position so that they penetrate into the workpiece surface, the distance between the initial position and the working position of the cutting bodies (12d, 13d, 14d, 15d, 16d) being constant, and means for adjusting the distance between the workpiece surface and the cutting bodies (12d, 13d, 14d, 15d, 16d) in their initial position are provided, so that the cutting bodies (12d, 13d, 14d, 15d, 16d) can be brought from their initial to their working positions.

23. Device according to Claim 22,
**characterised in that**
the means for adjusting the distance between the workpiece surface and the cutting bodies (12d, 13d, 14d, 15d, 16d) in their initial position are means whereby the cutting bodies (12d, 13d, 14d, 15d, 16d) are moved and/or the means for adjusting the distance between the workpiece surface and the cutting bodies in their initial position are means whereby the workpiece is moved and/or the means for adjusting the distance between the workpiece surface and the cutting bodies (12d, 13d, 14d, 15d, 16d) in their initial position are means whereby the bridge is moved.

24. Device according to Claim 22 and/or 23,
**characterised in that**
the means for moving the cutting bodies are linear drives (42), for example rack-and-pinion drives, constructed to be driven synchronously and acting in each case on the cutter head consoles (12e, 13e, 14e, 15e, 16e).

## Revendications

1. Procédé pour positionner plusieurs têtes de travail disposées l'une à côté de l'autre le long d'un axe de l'espace parallèle à une surface de pièce, des têtes de coupe (12, 13, 14, 15, 16) disposées en particulier sur un pont de machine (5) et appartenant à une installation de coupe du verre à têtes multiples, à commande numérique, dans lequel une tête de coupe (12, 13, 14, 15, 16) est associée à un chariot pouvant se déplacer dans la direction longitudinale (4) du pont, et au moins un chariot (7) est entraîné de façon commandée dans la direction longitudinale (4) du pont,
**caractérisé en ce que** :
A) on accouple les chariots (7, 8, 9, 10, 11) entre eux pour former un ensemble,
B) on amène les chariots (7, 8, 9, 10, 11) accouplés l'un après l'autre à une position de consigne prédéterminée le long du pont (5), on détache de l'accouplement, l'un après l'autre, les chariots (7, 8, 9, 10, 11) qui doivent être positionnés à cet endroit, et on les bloque en position fixe à l'exception du chariot entraîné (7) qui a été positionné en dernier,
C) on accouple entre eux les chariots (7, 8, 9, 10, 11) positionnés et bloqués qui forment un ensemble de chariots (7, 8, 9, 10, 11) positionnés,
D) on supprime les blocages des différents chariots (8, 9, 10, 11), de sorte que l'ensemble de chariots (7, 8, 9, 10, 11) accouplés entre eux peut être déplacé dans sa totalité le long de l'axe longitudinal (6) du pont.

2. Procédé selon la revendication 1,
**caractérisé en ce que** les chariots (7, 8, 9, 10, 11) accouplés entre eux formant un ensemble sont accouplés dans une disposition aussi serrée que possible.

3. Procédé selon la revendication 1 et/ou 2,
**caractérisé en ce qu'**on bloque aussi le chariot entraîné (7) qui a été positionné en dernier.

4. Procédé selon une ou plusieurs des revendications 1 à 3,
**caractérisé en ce qu'**on forme l'ensemble de chariots (7, 8, 9, 10, 11) positionnés seulement après que tous les chariots (7, 8, 9, 10, 11) ont été positionnés et bloqués.

5. Procédé selon une ou plusieurs des revendications 1 à 4,
**caractérisé en ce que**, pour la disposition des chariots (7, 8, 9, 10, 11) à un écartement axial aussi réduit que possible, on pousse les chariots (8, 9, 10, 11) non entraînés jusqu'au chariot entraîné (7) et on positionne et bloque à chaque fois le chariot (8, 9, 10, 11) de l'ensemble des chariots disposés de façon aussi serrée que possible qui est le plus éloigné du chariot entraîné (7).

6. Procédé selon une ou plusieurs des revendications 1 à 5;
**caractérisé en ce que** la formation de l'ensemble s'effectue par accouplement échelonné par paires de deux chariots (7, 8, 9, 10, 11) voisins.

7. Procédé selon une ou plusieurs des revendications 1 à 6,
**caractérisé en ce qu'**on libère les blocages des différents chariots (7, 8, 9, 10, 11) dès que le chariot entraîné (7) se trouve dans une position de consigne et que l'ensemble composé des chariots (7, 8, 9, 10, 11) positionnés est formé.

8. Procédé selon une ou plusieurs des revendications 1 à 7,
**caractérisé en ce que** le blocage des chariots (7, 8, 9, 10, 11) s'effectue sur le pont (5).

9. Procédé selon une ou plusieurs des revendications précédentes,
**caractérisé**
**en ce qu'**on positionne au moins une tête de travail, en particulier une tête de coupe (12, 13, 14, 15, 16) le long d'un axe de l'espace perpendiculaire à la surface de la pièce, les pièces, en particulier des plaques de verre planes (3) de différentes épaisseurs étant travaillées et des zones partielles de la tête de coupe (12, 13, 14, 15, 16), en particulier un corps de coupe, (12d, 13d, 14d, 15d, 16d) étant amenées, au début d'un cycle de travail, d'une certaine position de départ éloignée de la surface de la pièce à une position de travail dans laquelle elles pénètrent dans la surface de la pièce, la distance entre la position de départ du corps de coupe (12d, 13d, 14d, 15d, 16d) et la position de travail du corps de coupe (12d, 13d, 14d, 15d) étant maintenue constante et les corps de coupe (12d, 13d, 14d, 15d, 16d) étant préalablement positionnés, avant le début du cycle de travail, en ce qui concerne la distance à la surface de la pièce, dans la position de départ de telle manière que, dans la position de travail, les corps de coupe (12d, 13d, 14d, 15d, 16d) pénètrent dans la pièce sur une profondeur de pénétration prédéterminée.

10. Procédé selon la revendication 9,
**caractérisé en ce que** le positionnement s'effectue par élévation et abaissement, de préférence synchrones, des corps de coupe (12d, 13d, 14d, 15d, 16d) ou que le positionnement s'effectue par élévation et abaissement de la plaque de verre (3) ou **en ce que** le positionnement s'effectue par élévation et abaissement du pont (5).

11. Dispositif pour le positionnement de moyens de travail associés à des têtes de travail appartenant à une machine de travail à têtes multiples, en particulier, des corps de coupe (12d, 13d, 14d, 15d, 16d) associés à des têtes de coupe (12, 13, 14, 15, 16) appartenant à une installation de coupe du verre à têtes multiples (1), comprenant un pont (5) qui surplombe une table de coupe (2), et qui est entraîné le long de l'axe longitudinal (4) de la table, et sur lequel plusieurs têtes de coupe (12, 13, 14, 15, 16) sont disposées de façon à pouvoir être déplacées en translation l'une à côté de l'autre, le long d'un axe longitudinal (6) du pont, indépendamment les unes des autres, dans lequel au moins une tête de coupe (12) peut être entraînée le long de l'axe longitudinal du pont, en particulier dispositif pour la mise en oeuvre du procédé selon une des revendications 1 à 8,
**caractérisée en ce que** les têtes de coupe (12, 13, 14, 15, 16) sont associées chacune à un des chariots (7, 8, 9, 10, 11), qui sont disposés de façon à pouvoir coulisser indépendamment l'un de l'autre le long de l'axe longitudinal du pont, les chariots (7, 8, 9, 10, 11) présentant en supplément des dispositifs d'accouplement (27, 31, 35 ; 28, 32, 36 ; 29, 33, 37 ; 30, 34, 38) amovibles, pouvant être actionnés indépendamment les uns des autres, servant à les accoupler l'un à l'autre ou l'un derrière l'autre, les chariots non entraînés (8, 9, 10, 11) présentant des dispositifs d'immobilisation amovibles (23, 24, 25, 26) qui peuvent être actionnés indépendamment les uns des autres, pour assurer l'immobilisation en position fixe des chariots (8, 9, 10, 11) sur le pont (5) cependant qu'il est prévu des moyens pour l'actionnement des dispositifs d'accouplement (27, 31, 35 ; 28, 32, 36 ; 29, 33, 37 ; 30, 34, 38), des dispositifs de fixation (23, 24, 25, 26) et de l'entraînement d'au moins un chariot entraîné (7).

12. Dispositif selon la revendication 11,
**caractérisé en ce que** les têtes de coupe (12, 13, 14, 15, 16) sont fixées chacune à une console de tête de coupe (12e, 13e, 14e, 15e, 16e), les consoles étant montées sur les chariots (7, 8, 9, 10, 11), sur le côté avant du pont.

13. Dispositif selon la revendication 11 et/ou 12,
**caractérisé en ce qu'**aux différentes têtes de coupe sont associées des têtes de coupe auxiliaires (12a, 14a) qui sont de préférence utilisées pour des coupes grossières rectilignes d'une plaque de verre (3) ou pour des coupes auxiliaires.

14. Dispositif selon une ou plusieurs des revendications 11 à 13,
**caractérisé en ce que** les têtes de coupe (12, 13, 14, 15, 16) sont essentiellement composées chacune d'un boîtier de tête de coupe (12b, 13b, 14b, 15b, 16b) et d'un support de corps de coupe (12c, 13c, 14c, 15c, 16c), les supports de corps de coupe (12c, 13c, 14c, 15c, 16c) pouvant se déplacer axialement par rapport aux boîtiers de tête de coupe (12b, 13b, 14b, 15b, 16b) le long d'un axe d'avance (41a) perpendiculaire à la surface de la pièce, et étant montés de façon à pouvoir tourner autour de cet axe et pouvant être entraînés, et **en ce que** les corps de coupe (12d, 13d, 14d, 15d) sont logés dans les supports de corps de coupe (12c, 13c, 14c, 15c, 16c) et sont constitués, par exemple, par des molettes de coupe.

15. Dispositif selon une ou plusieurs des revendications 11 à 14,
**caractérisé en ce que** le pont (5) est essentiellement composé d'un corps avant de pont (20) portant un premier rail (20a) et d'un corps amère de pont (21) qui porte un deuxième rail (21a), rails sur lesquels les chariots (7, 8, 9, 10, 11) prennent appui.

16. Dispositif selon une ou plusieurs des revendications 11 à 15,
**caractérisé en ce que** le chariot support (7) est équipé d'un entraînement (22) le long de l'axe longitudinal du pont.

17. Dispositif selon une ou plusieurs des revendications 11 à 16,
**caractérisé en ce que** l'entraînement (22) est réalisé sous la forme d'un entraînement à crémaillère entraîné par moteur électrique.

18. Dispositif selon une ou plusieurs des revendications 11 à 17,
**caractérisé en ce que** les dispositifs de fixation (23, 24, 25, 26) sont composés chacun d'une unité à piston et cylindre munie d'éléments d'accouplement (23c, 24c, 25c, 26c) montés sur les côtés frontaux des pistons et **en ce que** les dispositifs d'accouplement sont constitués chacun par un dispositif de serrage (31, 32, 33, 34) qui enserre respectivement une glissière (27, 28, 29, 30) et **en ce que** des cylindres d'actionnement (35, 36, 37, 38) sont prévus pour l'actionnement des dispositifs de serrage.

19. Dispositif selon une ou plusieurs des revendications 11 à 18,
**caractérisé en ce que** les glissières (27, 28, 29, 30) et les dispositifs de serrage (31, 32, 33, 34) sont disposés sous les chariots (7, 8, 9, 10, 11) et les cylindres d'actionnement (35, 36, 37, 38) correspondants sont disposés au-dessus du plan des chariots, sur les chariots (8, 9, 10), les cylindres d'actionnement (35, 36, 37, 38) traversant les chariots (8, 9, 10) et actionnant les dispositifs de serrage (31, 32, 33, 34).

20. Dispositif selon une ou plusieurs des revendications 11 à 19,
**caractérisé en ce qu'**un entraînement linéaire (39) est agencé sur le corps du pont (21), sur le côté arrière, au-dessous du rail (21a), parallèlement à l'axe longitudinal du pont, entraînement qui est de préférence composé de deux cylindres pneumatiques à double effet (39a, 39b) qui sont reliés l'un à l'autre dans un alignement axial par l'intermédiaire de leurs régions de fond, et **en ce que** l'entraînement linéaire est monté articulé à une extrémité, de façon articulée, dans une console (39c) fixée au côté arrière du corps de pont (21), et présente à l'autre extrémité un poussoir (39d) équipé d'un tampon (39e) et d'un rouleau (39f) qui roule sur un rail (40) parallèle à l'axe longitudinal du pont, et **en ce que** le rail (40) est réalisé avec un contrecoude simple et possède un segment supérieur (40a) et un segment inférieur (40b), qui est abaissé par rapport au segment supérieur (40a), et **en ce que**, dans sa position de repos, l'entraînement linéaire (39) est disposé de manière que les chariots (7, 8, 9, 10, 11) puissent se déplacer sans obstacle le long de l'axe longitudinal du pont.

21. Dispositif selon une ou plusieurs des revendications 11 à 20,
**caractérisé en ce que** l'entraînement linéaire (39) est réalisé de manière que, lors de l'actionnement de l'entraînement linéaire (39), lorsqu'il parcourt le rail (40), le tampon (39e) entre en contact avec la région du chariot (11) qui déborde en arrière au-delà du rail (21a) et pousse ainsi ce dernier le long du pont (5) en direction du chariot entraîné (7).

22. Dispositif selon une ou plusieurs des revendications 11 à 21,
**caractérisé en ce que** des régions partielles des têtes de coupe (12, 13, 14, 15, 16), en particulier des corps de coupe (12d, 13d, 14d, 15d, 16d) sont disposées à distance d'une surface de la pièce dans une position de départ et dans une position pénétrant dans la surface de la pièce dans une position de travail, la distance entre la position de départ et la position de travail des corps de coupe (12d, 13d, 14d, 15d, 16d) étant constante, cependant qu'il est prévu des dispositifs pour le réglage de la distance entre la surface de la pièce et les corps de coupe (12d, 13d, 14d, 15d, 16d) placés dans la position de départ et des dispositifs pour faire passer les corps de coupe (12d, 13d, 14d, 15d, 16d) de la position de départ à la position de travail.

23. Dispositif selon la revendication 22,
**caractérisé en ce que** les dispositifs prévus pour le réglage de la distance entre la surface de la pièce et les corps de coupe (12d, 13d, 14d, 15d, 16d) placés dans la position de départ sont des dispositifs qui déplacent les corps de coupe (12d, 13d, 14d, 15d, 16d) et/ou les dispositifs prévus pour le réglage de la distance entre la surface de la pièce et les corps de coupe placés dans la position de départ sont des dispositifs qui déplacent la pièce et/ou les dispositifs prévus pour le réglage de la distance entre la surface de la pièce et les corps de coupe (12d, 13d, 14d, 15d, 16d) placés en position de départ sont des dispositifs qui mettent le pont en mouvement.

24. Dispositif selon la revendication 22 et/ou 23,
**caractérisé en ce que** les dispositifs qui mettent les corps de coupe en mouvement sont des entraînements linéaires (42), par exemple, des entraînements à crémaillère qui peuvent être entraînés de façon synchrone et qui sont réalisés de façon à agir respectivement sur les consoles de têtes de coupe (12e, 13e, 14e, 15e, 16e).
